# EUROPEAN PATENT APPLICATION

(11) **EP 2 496 050 A1**
(43) Date of publication of application: **05.09.2012**
(21) Application number: 11360011.8
(22) Date of filing: 01.03.2011
(51) Int. Cl.: H04W 88/10, H04W 8/00, H04W 84/04

(54) **Multi-operator radio cells**

(71) Applicant: Alcatel Lucent, 75007 Paris (FR)
(72) Inventor: Cherubini, Davide, Dublin (IE); Claussen, Holger, Straffan Co Kildare (IE); Bosch, Peter, 1432 MN Aalsmeer (NL)
(74) Representative: Coghlan, Judith Elizabeth Kensy

(57) **Abstract**

A wireless telecommunication network base station (30) operable to provide radio coverage to user equipment (34). The base station (30) is operable to provide a radio cell to user equipment (34) operating according to a set of characteristics determined by a network operator; detect user equipment (34) operating according to a set of characteristics determined by another network operator; and adjust its radio interface to establish a radio cell to support user equipment having characteristics of said other network operator. Accordingly, the apparatus and process described enables the sharing of radio cells supported by a given set of hardware amongst multiple mobile operators by use of virtualization techniques.

## Description

### FIELD OF THE INVENTION

The present invention relates to a wireless telecommunication network base station operable to provide a radio cell to user equipment, a method of providing a radio cell and a computer program product.

### BACKGROUND

Wireless telecommunications networks are known. In a cellular system radio coverage is provided by regions of geographical area. Those regions are known as cells. A base station is located in each cell to provide the radio coverage. Traditional base stations provide coverage in relatively large geographical areas and the cells are often referred to as macro cells. It is possible to provide smaller sized cells within a macro cell. Cells that are smaller than macro cells are sometimes referred to as micro cells, pico cells, or femto cells. However, throughout this document the term femto cell is used generically for cells that are smaller than macro cells. One way to establish a femto cell (sometimes referred to as a home cell) is to provide a femto base station (or home base station) that provides coverage having a relatively limited range within the coverage area of a macro cell. The transmission power of a femto base station is relatively low and, hence, each femto cell provides a small coverage area compared to that of a macro cell and covers, for example, an office or a home.

Such femto cells may be provided where the communications coverage provided by the macro cell is poor or where a user wishes to use an alternative communications link provided locally, by the femto base station, to communicate with the core network. Such a situation might arise where, for example, a user has a pre-existing communications link and the user wishes to utilise that link in preference to that provided by a macro cell network provider to communicate with the core network.

In order to maintain a high level of service to an end user, with minimal service interruption, it may be necessary to handover the user equipment from a macro cell within which it is located to a femto base station. Likewise, it may be necessary to handover the user equipment from one femto base station to another, or between cells supported by macro base stations.

Cellular systems using targeted cellular deployments including macrocells, femtocells and other small cells are typically implemented such that each base station may only support radio cells be used by a single network operator's customers. Wide use of femtocells allows a network operator to offload traffic from a macrocell supported by a macro base station.

Network operators can use a femtocell solution in order to achieve significant savings in CAPEX and OPEX. It is believed that the overall efficiency of femtocell deployment solutions can be improved.

It is desired to provide radio cell deployments which offer techniques which may improve overall operational efficiency.

### SUMMARY

Accordingly, a first aspect provides a wireless telecommunication network base station operable to:
provide a radio cell to user equipment operating according to a set of characteristics determined by a network operator;
detect user equipment operating according to a set of characteristics determined by another network operator; and
adjust its radio interface to establish a radio cell to support user equipment having characteristics of the other network operator.

Femtocells and other small cells allow wireless cellular systems to provide targeted cellular deployments. Cellular systems using targeted cellular deployments including femtocells or other small cells are typically implemented such that each femtocell may only be used by a single network operator's customers. Wide use of femtocells allows a network to offload traffic from a macrocell supported by a macro base station. Network operators can use a femtocell solution in order to achieve significant savings in CAPEX and OPEX. However, it is believed that the overall energy efficiency of femtocell deployment solutions can be improved.

The first aspect recognises that some problems and issues associated with femtocell deployments may be addressed or mitigated by using the capabilities offered by virtualisation techniques. Furthermore, it will be appreciated that such virtualisation techniques may be used more widely across a wireless telecommunications network, and be implemented in base stations of various types including, for example, NB, eNB, femto base stations, other small cell base stations and other components of a typical wireless telecommunications network, for example RNC or Femto Gateways.

Typically a base station provides a radio cell to user equipment operating according to a set of characteristics determined by a single network operator. Those characteristics may, for example, include the radio carrier frequency on which communication links are established, since each network operator may operate within a predetermined portion or portions of a frequency spectrum. The first aspect recognises that by allowing a base station to adjust its radio interface, it can establish a radio cell to support user equipment having characteristics of another network operator. Rather than provide that functionality constantly, a base station can offer significant flexibility and overall power efficiency across operator networks by detect user equipment operating according to a set of characteristics determined by another network operator within a radio coverage area supported by the base station and adjust its radio interface when users of a different operator network enter that coverage area.

In one embodiment, the adjustment to the radio interface establishes a radio cell to support user equipment having characteristics of said other network operator in addition to provision of the radio cell to user equipment operating according to a set of characteristics determined by a network operator. Accordingly, the base station provides two radio cells simultaneously. Each of those radio cells supports the users of one network operator. The adjustment may therefore comprise activating a further transmission and/or reception chain or allowing connection using existing or further radio channels on an existing transmission and/or reception chain.

In one embodiment, the adjustment to the radio interface establishes a radio cell to support user equipment having characteristics of the other network operator to replace the radio cell provided to user equipment operating according to a set of characteristics determined by a first network operator. Accordingly, a base station may be operable to support only one set of network operator users and only one cell at a time.

In one embodiment, the cells supported by the base station are determined by the nature of the user equipment detected by the base station. If no user equipment operating according to a set of characteristics determined by a first network operator are in a radio coverage area supported by the base station and user equipment operating according to a set of characteristics determined by a second network operator are detected, the base station may adjust its radio interface to support a cell only for the user equipment operating according to a set of characteristics determined by a second network operator.

In one embodiment, the base station is operable to detect user equipment operating according to a set of characteristics determined by one or more of a plurality of other network operators; and adjust its radio interface to establish a radio cell to support user equipment having characteristics of one of the plurality of other network operators. Accordingly, a base station may be operable to support the users of a plurality of network operators. Features and embodiments described in relation to two network operators may be extended as appropriate to offer analogous functionality across a plurality of networks. Accordingly, a base station owned and managed by a host mobile operator (Op1) is operable to accept connection requests generated by customers of one or more different mobile operators.

In one embodiment, the base station is operable to allocate radio resource to the radio cells supported by the base station. Accordingly, that allocation may be a predetermined allocation of radio resource between supported network operators.

In one embodiment, the base station is operable to dynamically allocate radio resource to the radio cells supported by the base station. Accordingly, the allocation may occur according to appropriate properties of the service to be offered by the base station, for example, the number of users of each network operator in a region served by the base station, or the type of data traffic being exchanged within the communication links between said base station and said user equipment for each network operator.

In one embodiment, the base station is operable to dynamically allocate radio resource to the radio cells supported by the base station on demand. Accordingly, the allocation may occur dynamically on demand thereby offering increased flexibility and optimised operation across ever changing network parameters.

In one embodiment, the base station is operable to dynamically assign shared resources between radio cells supported by the base station. Accordingly, in some embodiments, the base station operates to allocate shared resources in a manner similar to allocation of radio resource. That is to say, shared resource may be assigned in a pre-determined set of allocations, a dynamically generated allocation or on-demand according to prevailing network operating parameters.

In one embodiment, the base station is operable to direct data traffic between user equipment operating according to a set of characteristics determined by a given network operator and a core network of the given network operator for each radio cell supported by the base station. Accordingly, traffic to and from user equipment may be directed through said base station to the appropriate core network and a user may thus be offered full use of all services normally available via their own network provider.

In one embodiment, the base station is operable to monitor for an indication of entry of user equipment into a region of radio coverage supported by the base station. IN one embodiment, the base station further comprises a radio frequency sniffer operable to monitor for an increase in noise across a predetermined range of radio frequencies. One possible approach for detecting the presence of an active mobile is measuring the noise rise caused by the mobile on an associated uplink carrier frequency. A carrier frequency where such a noise rise is detected can be used to indicate which host, or non-host operator, may have user equipment in the area of coverage supported by the base station.

In one embodiment, the base station is operable to readjust the radio interface to disestablish the radio cell to support user equipment having characteristics of the other network operator if the user equipment operating according to a set of characteristics determined by another network operator is no longer detected. Accordingly, if a host base station detects that a guest virtual instance is no longer required, for example, if all second network provider users have left the area covered by a base station, a virtual instance can be removed and the resources released for alternative use. In one embodiment, the base station is operable to disestablish a radio cell after a predetermined inactive time period.

A second aspect provides a method of providing radio cells in a wireless telecommunication network said method comprising the steps of:
providing a radio cell to user equipment operating according to a set of characteristics determined by a network operator;
detecting user equipment operating according to a set of characteristics determined by another network operator; and
adjusting a radio interface to establish a radio cell to support user equipment having characteristics of the other network operator.

In one embodiment, the adjusting establishes a radio cell to support user equipment having characteristics of the other network operator in addition to provision of the radio cell to user equipment operating according to a set of characteristics determined by a network operator.

In one embodiment the adjusting establishes a radio cell to support user equipment having characteristics of the other network operator to replace the radio cell provided to user equipment operating according to a set of characteristics determined by a network operator.

In one embodiment, the method comprises the steps of:
detecting user equipment operating according to a set of characteristics determined by one or more of a plurality of other network operators;
and adjusting a radio interface to establish a radio cell to support user equipment having characteristics of one of the plurality of other network operators

In one embodiment, the method comprises the step of allocating radio resource to the radio cells supported by a base station.

In one embodiment, the method comprises the step of dynamically allocating radio resource to the radio cells supported by a base station.

In one embodiment, the method comprises the step of dynamically allocating radio resource to the radio cells supported by the base station on demand.

In one embodiment, the method comprises the step of dynamically allocating shared resources between radio cells supported by a base station.

In one embodiment, the method comprises the step of directing data traffic between user equipment operating according to a set of characteristics determined by a given network operator and a core network of the given network operator for each radio cell supported by a base station.

In one embodiment, the method comprises the step of monitoring for an indication of entry of user equipment into a region of radio coverage supported by a base station.

In one embodiment, the method comprises the step of providing a radio frequency sniffer operable to monitor for an increase in noise across a predetermined range of radio frequencies.

In one embodiment the method comprises the steps of readjusting the radio interface to disestablish the radio cell to support user equipment having characteristics of the other network operator if the user equipment operating according to a set of characteristics determined by another network operator is no longer detected.

In one embodiment, the disestablishment of the radio cell occurs after a predetermined time period.

A third aspect provides a computer program product operable, when executed on a computer, to perform the method the second aspect.

Further particular and preferred aspects are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiments of the present invention will now be described further, with reference to the accompanying drawings, in which:
Figure 1 illustrates schematically the main components of a telecommunications network according to one embodiment;
Figure 2 illustrates schematically a general deployment within one macro cell shown in Figure 1;
Figure 3 illustrates schematically a relationship between a femto base station and user equipment supported by that femto base station;
Figure 4 illustrates schematically a scenario in which a femto base station is operable to share resources between user equipment being supported by more than one network operator;
Figures 5a to 5d illustrate schematically operation of a femto base station according to one embodiment;
Figure 6 illustrates method steps performed by a femto base station to operate according to an embodiment as shown in Figures 5a to 5c; and
Figure 7 illustrates the method steps performed by a base station according to one embodiment to effect deletion and resource release.

### DESCRIPTION OF THE EMBODIMENTS

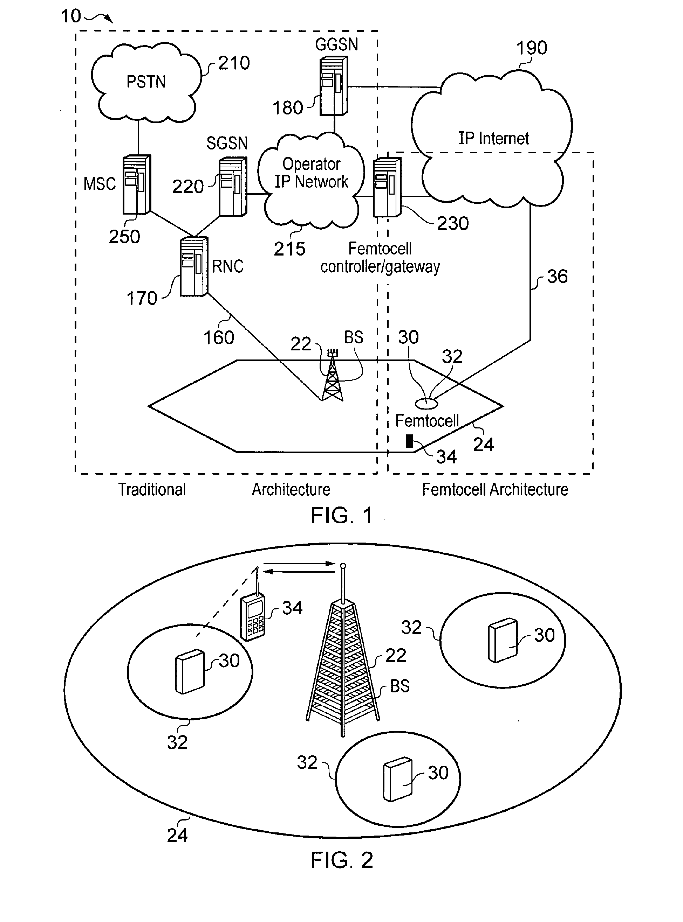

Figure 1 illustrates a wireless communication network, generally 10, according to one embodiment. User equipment 34 roam through the wireless communication network 10. Base stations 22 are provided which support respective macro cells 24. A number of such base stations are provided, which are distributed geographically in order to provide a wide area of coverage to the user equipment 34. When user equipment 34 is within a macro cell 24 supported by the base station 22 then communications may be established between the user equipment 34 and the base station 22 over an associated radio link. Each base station typically supports a number of sectors. Typically, a different antenna within a base station supports an associated sector. Accordingly, each base station has multiple antennas and signals sent through the different antennas are electronically weighted to provide a sectorised approach. It will be appreciated that Figure 1 illustrates a small subset of the total number of user equipment and base stations that may be present in a typical communications system.

The operation of a cluster of base stations is managed by a radio network controller 170. The radio network controller 170 controls the operation of the wireless communications network 10 by communicating with the base stations 22 over a backhaul communications link 160. The network controller 170 also communicates with the user equipment 34 via their respective radio links in order to efficiently manage the wireless communication network 10.

The radio network controller 170 maintains a neighbour list which includes information about the geographical relationship between cells supported by base stations. In addition, the radio network controller 170 maintains location information which provides information on the location of the user equipment within the wireless communications network 10. The radio network controller 170 is operable to route traffic via circuit-switched and packet-switched networks. Hence, a mobile switching centre 250 is provided with which the radio network controller 170 may communicate. The mobile switching centre 250 then communicates with a circuit-switched network such as a public switched telephone network (PSTN) 210. Likewise, the network controller 170 communicates via an operator IP network 215 with serving general packet radio service support nodes (SGSNs) 220 and a gateway general packet radio support node (GGSN) 180. The GGSN then communicates with a packet-switch core 190 such as, for example, the Internet.

As shown in more detail in Figure 2, there are provided a number of femto cell base stations 30 (sometimes referred to as home base stations), each of which provides a femto cell 32 (or home cell) in the vicinity of a building within which the associated femto cell base station is installed. The femto cells 32 provide local communications coverage for a user in the vicinity of those buildings. Each femto cell base station 30 communicates with the network 10 via a femto cell controller/gateway 230. A handover or camping event is initiated between the base station 22 and the femto cell base stations 30 when the user equipment 34 provides a measurement report to the macro base station 22 which indicates that a femto base station 30 is within range. The femto cell base stations 30 typically utilise the user's broadband Internet connection 36 (such as ADSL, Cable, Ethernet, etc.) as a backhaul.

Femto cell base stations 30 are lower-power, low-cost, user-deployed base stations that provide a high cellular quality of service in residential or enterprise environment these femto base stations can provide the functionality of RNCs, SGSNs, GGSNs and MSCs. In contrast to current macro cell approaches where complex and highly reliable base stations are deployed to strategic locations decided by the network owner, the femto cell base stations 30 are provided locally by customers. Such femto cell base stations 30 provide local coverage in areas of the macro network where quality of service may be low. Hence, the femto cell base stations 30 provide for improved quality of service in areas which are difficult for network operators. To reduce the cost of the femto base stations 30 and to reduce complexity and interference effects of the femto cell 32 on other user equipment within the macro cell, the transmission power of the femto cell base station 30 is relatively low in order to restrict the size of the femto cell 32 to a range of tens of metres or less. The femto cell base stations 30 have extensive auto-configuration and self-optimisation capability to enable a simple plug-and-play deployment. As such, they are designed to automatically integrate themselves into an existing macro cellular wireless network 10. In addition, some access point within the macro cellular network contains some functionality traditionally provided by the core network.

Each femto base station 30 will typically have functionality to control which user equipment 34 may access to that femto base station 30. A closed access femto base station will only allow access to those user equipment who have been indicated (for example using the user equipment's International Mobile Subscriber Identity (IMSI)) as being registered with that femto base station, whereas an open access femto base station allows access to all user equipment.

It will be understood that femto base stations act to create a sub-layer of coverage within the existing macro cell layer.

In a typical network 10 user equipment receives a signal from base stations (both macro and femto).

Femto base stations 30, supporting areas of coverage 32 can be operable to measure the ambient radio noise floor in their particular geographic location. Active user equipment entering a coverage area of a femto base station 30 will be seen by the femto base station as a new radio interference source that effectively increases the measured radio noise floor of the femto cell. Since the coverage area provided by a femto cell is small and femto cells are deployed accordingly, user equipment that wishes to use the services of a femto base station is likely to be a nomadic or stationary user and the rise in radio noise floor is likely to be persist whist the user equipment remains within the femto cell.

Femtocells and other small cells allow wireless cellular systems to provide targeted cellular deployments.

Cellular systems using targeted cellular deployments including femtocells or other small cells are typically implemented such that each femtocell may only be used by a single network operator's customers. Wide use of femtocells allows a network to offload traffic from a macrocell supported by a macro base station. Network operators can use a femtocell solution in order to achieve significant savings in CAPEX and OPEX. However, it is believed that the overall energy efficiency of femtocell deployment solutions can be improved. Some problems and issues with femtocell deployments may be addressed or mitigated by using the capabilities offered by virtualisation techniques.

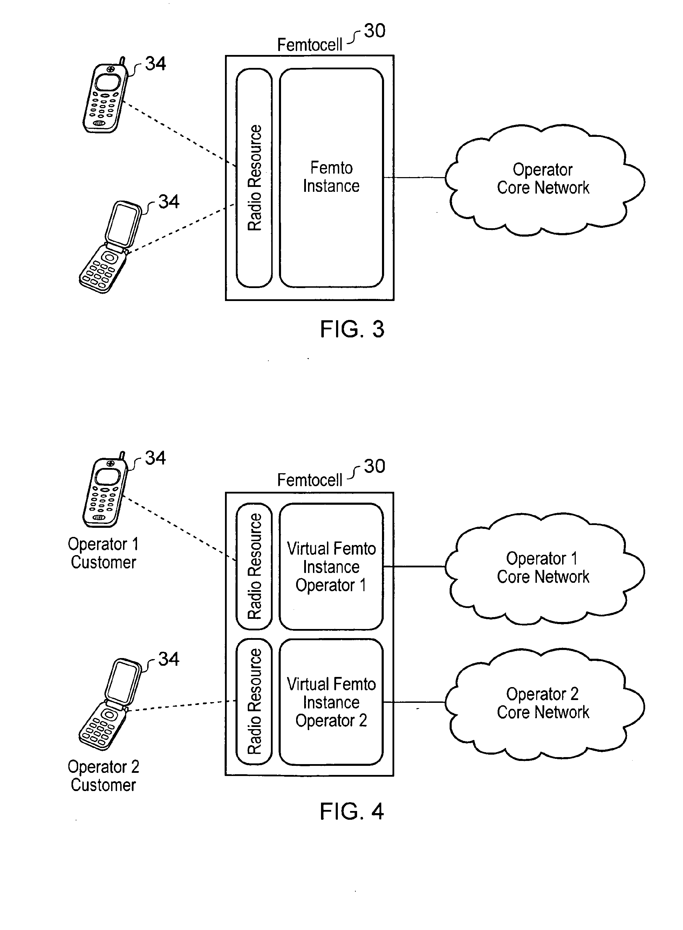

Figure 3 illustrates schematically a relationship between a femto base station and user equipment supported by that femto base station 30. In typical femtocell deployments, each femto base station 30 provides network coverage to users of a given operator and is owned and managed by that single mobile network operator. Consequently, available femto base station resources, for example, radio resource and backhaul, are shared amongst the connected user equipment belonging to that mobile network operator.

Figure 4 illustrates schematically a scenario in which a femto base station is operable to share resources between user equipment being supported by more than one network operator. Different operators may share the infrastructure via virtualization and multiradio deployment. According to such a configuration, shared resources (for example, backhaul capacity) are dynamically assigned to each operator instance.

Such an arrangement may address and partially solve some issues associated with femtocell deployments, yet typically offer a closed and crystallized system, with associated new disadvantages. The flexibility of each femtocell may, in fact, be reduced since any guest operators to be supported by such a femtocell are preconfigured and statically assigned. Such a static assignment may also require a large amount of additional hardware resources to be provided in the femtocell (for example, transmission and/or reception chains) which can increase the implementation costs of such an arrangement.

A further possible solution is to create, on demand, virtual instances of femtocell functions. Accordingly, a femtocell which is owned and managed by a host mobile operator (Op1) is operable to accept connection requests generated by customers of one or more different mobile operators.

In some embodiments, the acceptance of connection requests by non home-operator user equipment is achieved by allowing a femto base station to be operable to set up an ad-hoc virtual instance of femto services for a guest operator (Op2) and to dynamically reserve available resources.

Creation of such virtual instance(s) of femto services for a guest operator (or operators) is started by an application which, in turn, is triggered when a radio frequency sniffer provided in a femto base station detects the presence of one or more guest users.

A virtual femtocell instance implemented by a femto base station having such capability may be created as a whole virtual machine (in which a whole operating system and associated functions are virtually replicated) or as a virtual replication of the femtocell functions within the same OS, or with other virtualization techniques.

Interconnection with a femto cluster and Core Network or a guest operator may use either existing network interface of a host femto base station or a host femto base station may be operable to create new virtual network interfaces.

Available radio resources may be deployed according to the number of virtually hosted operators.

If a host femto base station detects that a guest virtual instance is no longer required, for example, if all Op2 users have left the area covered by the femtocell, the virtual instance can be removed and the resources released for alternative use.

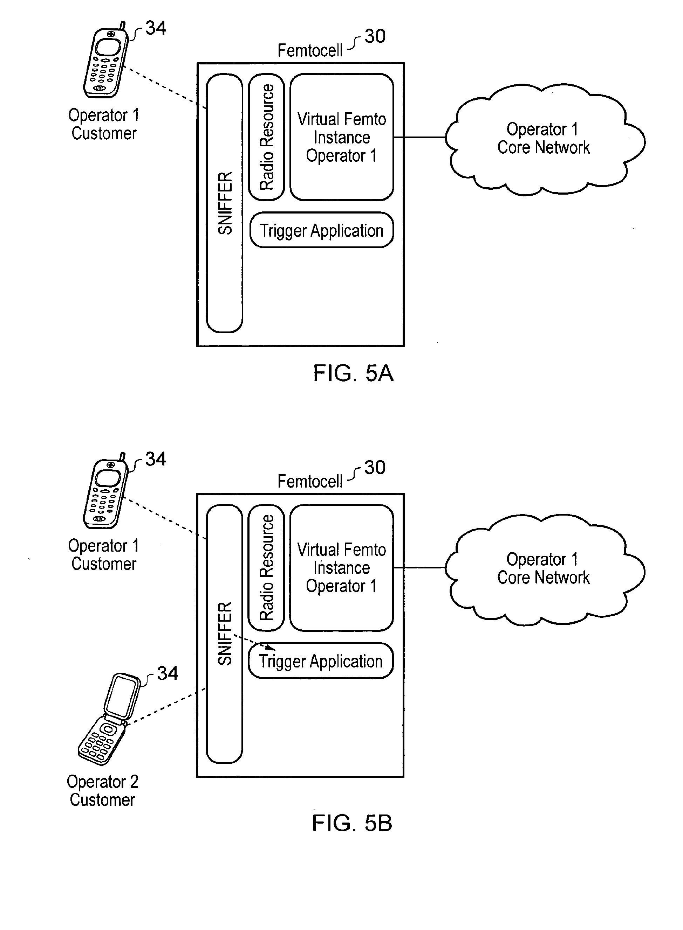

Figures 5a to 5d illustrate schematically operation of a femto base station according to one embodiment. In the illustrated embodiment, a femto base station is provided with triggering logic which is operable to provide a triggering application. Provision of triggering logic allows a femto base station supporting a femtocell to detect new User Equipment (UE) entering its coverage area. Such functionality may be achieved by using a radio frequency sniffer, which may be integrated into the femto base station. The radio frequency sniffer is used with appropriate detection techniques.

One possible approach for detecting the presence of an active mobile is measuring the noise rise caused by the mobile on an associated uplink carrier frequency. A carrier frequency where such a noise rise is detected can be used to indicate which host, or non-host operator, may have user equipment in the area of coverage supported by the femto base station.

Measured radio noise floor may be utilised by appropriate choice of threshold triggers. The thresholds must be set low enough such that the femto base station notifies the femto gateway of a potential handover before the macro system initiates an active handover procedure to a femto cell, otherwise the macro level to femto level handover would fail. At the same time it will be appreciated that threshold must not be too low or it will result in too many false positives a user equipment pass though, but do not remain in, a femto cell.

In a co-channel case, the entry of user equipment 34 to a femto cell 32 is seen as a new source of radio interference and causes a consequent rise in radio noise floor. It will be understood that the technique can be extended to a non co-channel case (i.e. the macro underlay a different carrier frequency to the femto overlay). This scenario requires that the femto base station has knowledge of the macro underlay frequency. Such information can be provided and kept updated by the FMS (Femto Management System) during an initial femto base station auto-configuration process. The non co-channel case also requires that the femto base station has the capability to perform measurements of the noise floor of the underlay frequency.

In one embodiment, a local rise in noise floor at a femto cell can be used as an indicator to the femto gateway that there is a possibility of user equipment being handed over to it. This possibility is signalled to the femto gateway. The signalling event leads to a noise floor flag being set at the femto gateway in anticipation of an active handover signalling event message being received from the macro cellular network. It will be appreciated that any measurable characteristic indicative of user equipment entering a femto cell may be utilised in a similar manner to the rise in radio noise floor, for example, an increase in block error rate an increase in bit error rate or a rise in strength of received broadcast channel strength from a femto base station at user equipment.

It will be appreciated that as active user equipment enters a geographical region served by a femto base station 30, there is likely to be an increase in the measured noise floor.

If user equipment is detected in the coverage area supported by a femto base station, any active sessions (voice or data) may then be handed over from a source cell, which may be either a macro cell or another small cell, to the femtocell supported by a destination femto base station.

As illustrated in Figures 5a to 5d, if the detected UE is a Host Op1 customer, the femto base station is operable to reserve required resources for such user, if those resources are available, thus allowing a user UE to connect to a Core Network belonging to Host Op1.

If the detected UE is a Guest Op2 customer, the RF sniffer located in the femto base station will trigger a process that creates a virtual femto instance for the guest operator. The guest operator is determined by the femto base station on the basis of the carrier frequency on which increased noise is measured by the RF sniffer, together with a look up table of known associations between frequencies and operators.

In the case of a Host Op1 user, the connection is handed over using the normal existing process and configuration.

In the case of a Guest Op2 user, as shown in Figure 5b, the RF sniffer is operable to trigger an application that manages creation of a virtual instance of femtocell functions and services.

The "virtual" femtocell creates a connection to the Guest operator's Core Network (CN) via a corresponding Femto Gateway (FGW) which can be either a dedicated box or a virtual co-located FGW.

The information needed to successfully complete an association between a virtual femtocell and a Guest Op2 core network can be gathered from a common management system, which may be shared across femto base stations, or can be preconfigured in the femto base station. The necessary information can be stored in the femto base station memory to speed up the association process in future scenarios.

A unique authorization name is assigned to each virtual femto instance and is pre-emptively passed to an AAA server of Guest Op2 for authentication, authorization, and accounting.

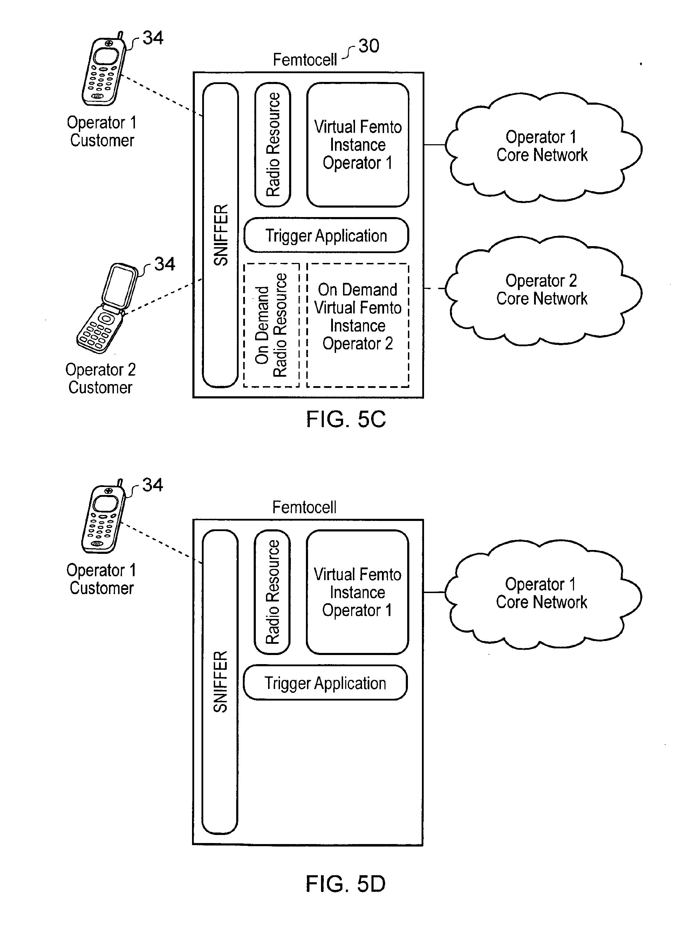

When a connection with the core network of Guest Op2 is completed, the femto base station is operable to start transmitting a pilot signal on a carrier which allows communication with the detected user equipment belonging to Guest Op2 and the connection between the Guest Op2 network and the Host Op1 network is managed such that any active connections are handed over to the virtual instance and managed using the normal processes available in the femtocell supported by the femto base station, as illustrated schematically in Figure 5c.

If a femto base station detects that Guest Op2 customers are no longer present in the coverage area and a predetermined wait-for-Op2-connections time has expired, the virtual femto instance supported by a femto base station can be deleted and resources which were used by Guest Op2 are released for future use by Host Op1 user equipment and user equipment belonging to other guest network operators supported by a femto base station. That deletion of a virtual femto instance is illustrated schematically in Figure 5d.

In alternative embodiments, a virtual femto instance supported by a femto base sta tion may be deleted only when the femto base station resources are required for a new virtual instance.

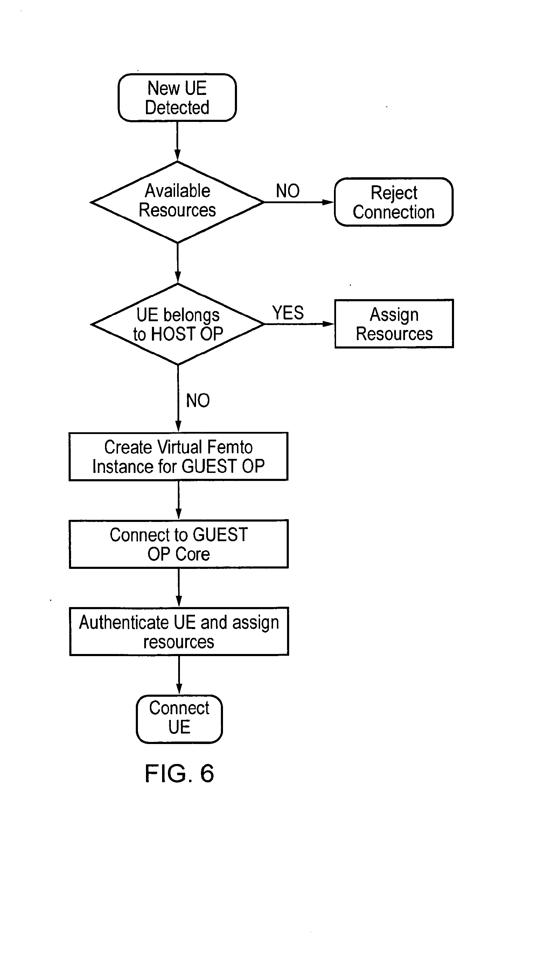

Figure 6 illustrates method steps performed by a femto base station to operate according to an embodiment as shown in Figures 5a to 5c.

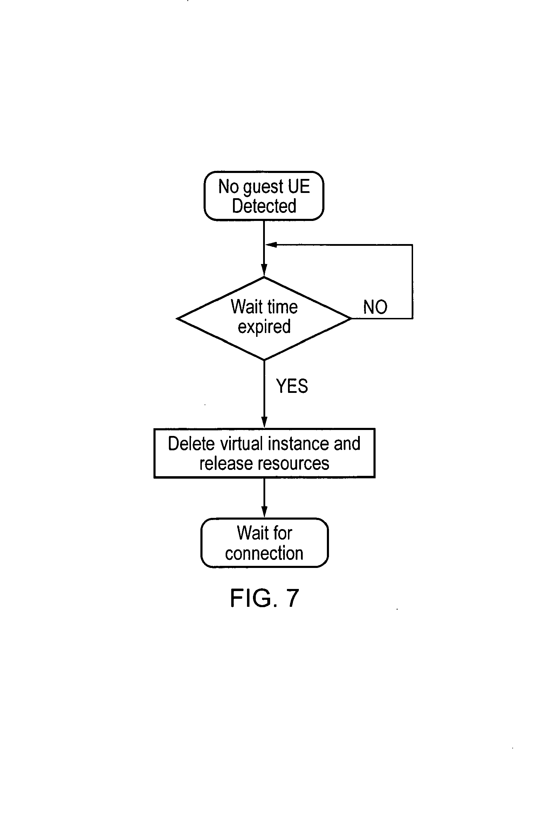

Figure 7 illustrates the method steps performed by a base station according to one embodiment to effect deletion and resource release.

The apparatus and process described herein enables the sharing of radio cells amongst multiple mobile operators. In particular, small radio cell coverage may be shared.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A wireless telecommunication network base station operable to:
provide a radio cell to user equipment operating according to a set of characteristics determined by a network operator;
detect user equipment operating according to a set of characteristics determined by another network operator; and
adjust its radio interface to establish a radio cell to support user equipment having characteristics of said other network operator.

2. A wireless telecommunication network base station according to claim 1, wherein said adjustment to said radio interface establishes a radio cell to support user equipment having characteristics of said other network operator in addition to provision of said radio cell to user equipment operating according to a set of characteristics determined by a network operator.

3. A wireless telecommunication network base station according to claim 1, wherein said adjustment to said radio interface establishes a radio cell to support user equipment having characteristics of said other network operator to replace said radio cell provided to user equipment operating according to a set of characteristics determined by a network operator.

4. A wireless telecommunication network base station according to any preceding claim, wherein said base station is operable to detect user equipment operating according to a set of characteristics determined by one or more of a plurality of other network operators;
and adjust its radio interface to establish a radio cell to support user equipment having characteristics of one of said plurality of other network operators

5. A wireless telecommunication network base station according to any preceding claim, wherein said base station is operable to allocate radio resource to said radio cells supported by said base station.

6. A wireless telecommunication network base station according to any preceding claim, wherein said base station is operable to dynamically allocate radio resource to said radio cells supported by said base station.

7. A wireless telecommunication network base station according to claim 6, wherein said base station is operable to dynamically allocate radio resource to said radio cells supported by said base station on demand.

8. A wireless telecommunication network base station according to any preceding claim, wherein said base station is operable to dynamically assign shared resources between radio cells supported by said base station.

9. A wireless telecommunication network base station according to any preceding claim, wherein said base station is operable to direct data traffic between user equipment operating according to a set of characteristics determined by a given network operator and a core network of said given network operator for each radio cell supported by said base station.

10. A wireless telecommunication network base station according to any preceding claim, wherein said base station is operable to monitor for an indication of entry of user equipment into a region of radio coverage supported by said base station.

11. A wireless telecommunication network base station according to claim 10, wherein said base station further comprises a radio frequency sniffer operable to monitor for an increase in noise across a predetermined range of radio frequencies.

12. A wireless telecommunication network base station according to any preceding claim operable to readjust said radio interface to disestablish said radio cell to support user equipment having characteristics of said other network operator if said user equipment operating according to a set of characteristics determined by another network operator is no longer detected.

13. A wireless telecommunication network base station according to claim 12, wherein said base station is operable to disestablish said radio cell after a predetermined time period.

14. A method of providing radio cells in a wireless telecommunication network said method comprising the steps of:
providing a radio cell to user equipment operating according to a set of characteristics determined by a network operator;
detecting user equipment operating according to a set of characteristics determined by another network operator; and
adjusting a radio interface to establish a radio cell to support user equipment having characteristics of said other network operator.

15. A computer program product operable, when executed on a computer, to perform the method of claim 14.
